# FASCICULE DE BREVET EUROPEEN

(11) **EP 0 465 282 B1**
(45) Date de publication et mention de la délivrance du brevet: **24.08.1994**
(21) Numéro de dépôt: 91401522.7
(22) Date de dépôt: 10.06.1991
(51) Int. Cl.: F15B 15/08, F16H 25/22, B64C 13/36

(54) **Vérin rotatif à billes**
Kugeldrehantrieb
Rotary ball actuator

(30) Priorité: 29.06.1990 FR 9008215
(43) Date de publication de la demande: 08.01.1992
(73) Titulaire: RATIER-FIGEAC, F-46101 Figeac (FR)
(72) Inventeur: Bousquet, Jacques, F-46100 Figeac (FR)
(74) Mandataire: Bertrand, Didier

(56) Documents cités:
- FR-A- 833 386
- SU-A- 734 429
- US-A- 2 690 683
- US-A- 2 711 655
- US-A- 4 738 415
- US-A- 4 887 479

## Description

L'invention concerne d'une manière générale les dispositifs de commande d'organes de sortie coaxiaux pivotant l'un par rapport à l'autre tels que les gouvernes d'avion par rapport à la voilure, et plus particulièrement les vérins rotatifs à billes.

On sait en effet que l'augmentation de la vitesse des avions (avions de chasse supersoniques) et la furtivité (insensibilité à la détection au radar) nécessitent des surfaces continues, c'est-à-dire sans saillies, de façon à perturber le moins possible l'écoulement aérodynamique.

Pour atteindre ce résultat, trois familles de solutions sont utilisées : les vérins rotatifs épicycloidaux; les vérins rotatifs hydrauliques à palettes; et les vérins rotatifs à billes.

La première famille pose des problèmes de rigidité, principalement si l'on veut avoir un couple important dans une épaisseur la plus faible possible.

La deuxième famille pose des problèmes de fuite (donc de rendement).

La troisième famille, celle des vérins rotatifs à billes, a de grands avantages en matière de rendement, de rigidité et de durée de vie.

Cependant, pour qu'un vérin rotatif à billes fonctionne correctement, compte tenu notamment des charges importantes et des vibrations, il est nécessaire de s'assurer que les billes ne s'accumulent pas le long de leurs pistes.

Dans ce but, on a conçu des vérins à recirculation de billes, tel que celui que décrit le document US-A-4 134 329 au nom du demandeur, dont on incorpore l'enseignement à la présente demande, ou le document US-A-4 738 415. Un tel vérin donne généralement satisfaction et on pourra aussi se reporter à l'article "Rotary Servohinge Actuator" par George Miller Jr. et Mark Williams, paru dans SAE Technical Paper Series en 1989 (ISSN 0148-7191) illustrant une version plus élaborée de vérin rotatif à recirculation de billes.

Toutefois, le circuit de recirculation de billes entraîne deux conséquences relativement indésirables : une augmentation du nombre de billes et une augmentation de la largeur du vérin, se traduisant par une augmentation de poids.

Il a été proposé, dans le document EP-A-151 788, de supprimer le circuit de recirculation des billes. Mais la solution proposée, consistant notamment à prévoir un manchon intermédiaire assurant la superposition de deux pistes hélicoidales de billes ne résout que partiellement les problèmes de poids évoqués ci-dessus et, de surcroît, présente des difficultés techniques de réalisation.

Le but de l'invention est d'obtenir un vérin rotatif à billes non recyclées exempt des inconvénients mentionnés, et permettant une réduction significative d'encombrement et de poids.

Pour atteindre ce but, l'invention propose un premier mode de réalisation de vérin rotatif à billes, tel que défini dans la revendication annexée 1.

Les premières billes et secondes billes sont maintenues respectivement dans des première et seconde cages à billes interposées entre le piston et le corps, comme connu par le document FR-A-833 386. On assure ainsi que les billes ne risquent pas de s'accumuler. Les premières et secondes billes, ainsi que les première et seconde cages, sont disposées de préférence sensiblement sur un même cylindre virtuel, dans le prolongement les unes des autres, de manière à éviter toute surépaisseur.

Les première et seconde cages sont asservies au mouvement du piston de sorte que la position des billes est parfaitement définie à tout moment, même en cas de vibrations nombreuses du dispositif incorporant le vérin.

Selon le second mode de réalisation encore plus avantageux, tel que défini dans la revendication annexée 2, les première et seconde cages sont formées par les première et seconde parties d'une cage unique.

Celle-ci comporte une enveloppe cylindrique qui coopère par l'intermédiaire d'un dispositif à ergot et rampe hélicoidale avec une des deux parties du corps, en principe la partie mobile.

L'enveloppe comporte des trous de réception pour les billes des rampes hélicoidales et rectilignes.

Les trous prévus dans l'une des deux parties, de préférence la partie affectée aux billes des rampes rectilignes, offrent un guidage axial des billes mais pas de guidage circonférentiel de manière à permettre un déplacement angulaire différent des billes dans l'une et l'autre parties. Avantageusement, les trous de la partie affectée aux rampes rectilignes sont allongés circonférentiellement.

D'autres avantages et caractéristiques de l'invention apparaîtront à la lecture de la description suivante d'un mode préféré de réalisation. On se référera aux dessins annexés sur lesquels :
- la figure 1 est une vue en deux demi-coupes axiales orthogonales d'un vérin conforme à un premier mode de réalisation de l'invention,
- la figure 2 est une vue en développé sur 360° des extrémités cylindriques en chevauchement des cages des billes des pistes respectivement hélicoidales et rectilignes du vérin de la figure 1,
- la figure 3 est une vue en perspective partiellement arrachée d'un vérin rotatif de l'art antérieur, à recirculation de billes,
- la figure 4 est une vue analogue à la figure 1 d'un second mode de réalisation de l'invention,
- la figure 5 est une vue de face de la cage unique utilisée dans le vérin de la figure 4.

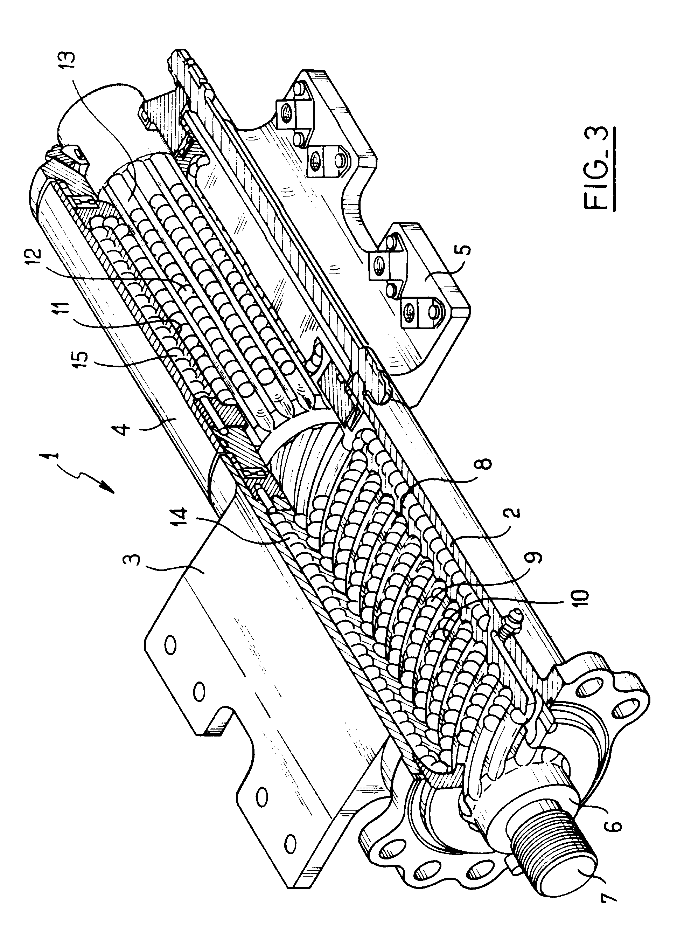

On rappellera d'abord, en se référant à la figure 3, la structure générale d'un vérin rotatif à billes, tel que montré dans l'article "Rotary Servohinge Actuator" mentionné plus haut, une telle structure générale étant naturellement reprise dans le vérin conforme à l'invention.

Le vérin 1 comprend un corps cylindrique creux fixe 2 comportant sur sa surface extérieure une pièce 3 de fixation à la partie fixe d'une voilure, non représentée, par des fixations appropriées.

Un corps cylindrique creux pivotant 4 est disposé coaxialement dans le prolongement du corps fixe 2 et est relié à une surface aérodynamique pivotante non représentée par l'intermédiaire d'une pièce de fixation 5 et de moyens de fixation appropriés. Le corps pivotant 4 est monté en rotation par rapport au corps fixe 2, et est bloqué en translation par rapport à celui-ci.

Un piston 6 est logé à l'intérieur des corps 2 et 4 du vérin 1 et comporte une tête 7 d'interface avec un vérin hydraulique de commande (non représenté) destiné à lui imprimer une poussée axiale.

Le corps fixe 2 présente à l'intérieur des rampes hélicoïdales 8 de dureté et forme appropriées pour le passage de billes 9 maintenues de l'autre côté par des rampes hélicoïdales 10 correspondantes formées sur la surface en regard du piston 6.

Le corps pivotant 4 comporte des pistes rectilignes 11 équidistantes, de dureté et forme appropriées pour le passage de billes 12, maintenues de l'autre côté par des pistes rectilignes 13 correspondantes formées sur la surface en regard du piston 6.

Lorsque le piston 6 reçoit une poussée axiale, il se déplace en translation par rapport aux corps 2 et 4 du vérin, et simultanément en rotation par rapport au corps fixe 2 sous l'effet vis-écrou résultant de la coopération des rampes hélicoïdales 8,10.

Du fait que le corps 4 est solidaire en rotation du piston 6 (grâce aux pistes rectilignes de clavetage) mais solidaire en translation du corps fixe 2, le mouvement hélicoïdal induit du piston 6 entraîne le corps pivotant 4 en rotation.

Un système de ce type étant soumis à des vibrations, des charges et des accélérations variables, les billes sont, dans la solution de l'art antérieur, disposées contigües dans un circuit fermé comprenant des trajets de recirculation 14 et 15 que la présente invention a précisément pour but d'éliminer, car ils entraînent notamment une augmentation de l'encombrement radical du vérin.

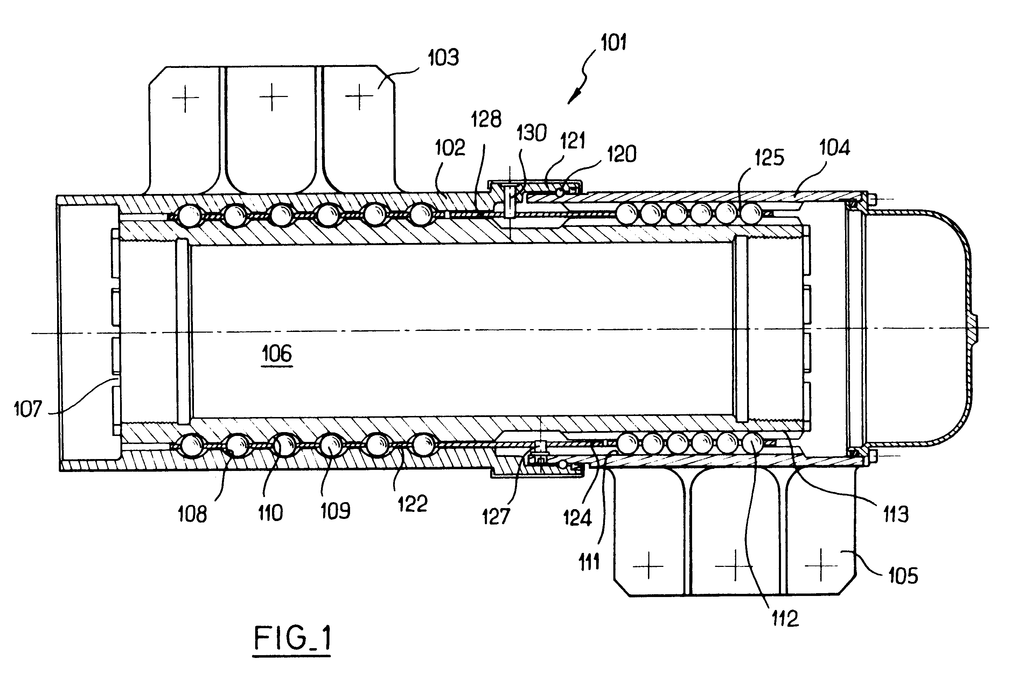

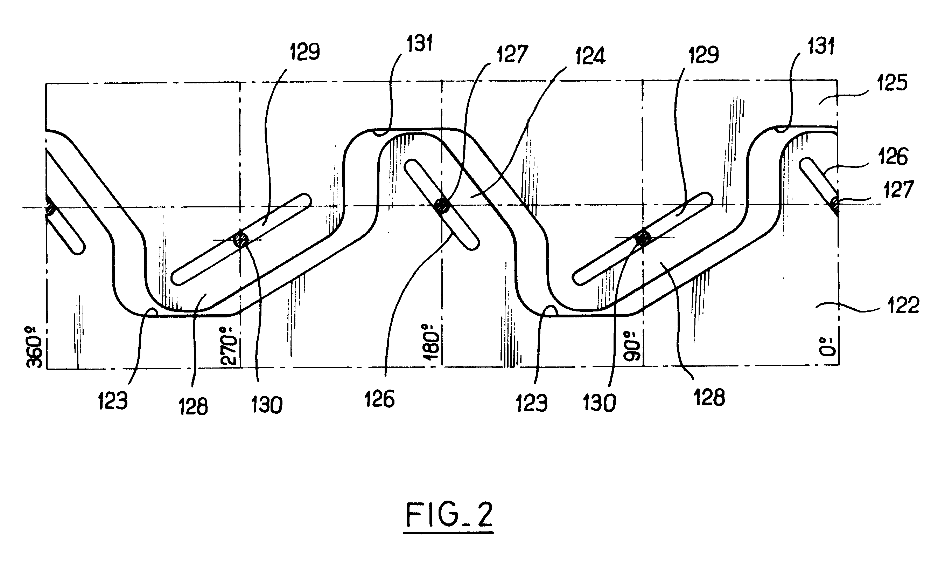

Comme les billes ne peuvent être laissées libres sans risquer de quitter leur position normale et venir coincer le fonctionnement du système, l'invention prévoit d'introduire une cage à billes pour les billes des pistes hélicoidales et rectilignes, ainsi qu'on va l'expliquer en se référant aux figures 1 et 2.

Sur ces figures, les éléments correspondant à des éléments connus de l'art antérieur représenté figure 3 portent la même référence numérique, augmentée de 100.

C'est ainsi que la figure 1 montre le vérin 101 constitué des corps fixe 102 et pivotant 104, montés en rotation libre et translation bloquée grâce à un roulement à billes 120 intercalé entre une bride 121 solidaire du corps 102 et la surface extérieure du corps pivotant 104 partiellement recouverte par ladite bride cylindrique 121.

Le piston 106 est susceptible de recevoir la poussée de commande sur sa face 107. Le piston 106 comporte : d'une part, des rampes hélicoïdales 110 (par exemple 18 rampes au pas de 360 mm) qui coopèrent par l'intermédiaire de billes 109 avec les rampes hélicoïdales 108 du corps 102; et d'autre part, des pistes ou rampes rectilignes 113 (par exemple 24 pistes réparties circonférentiellement) coopérant grâce aux billes 112 avec les pistes rectilignes 111 du corps pivotant 104.

Conformément à l'invention, les billes 109 des rampes hélicoïdales sont maintenues solidaires par une cage à billes 122 constituée par un cylindre à paroi mince percée de trous de réception disposés en hélices dans lesquels sont engagées les billes 109. Il est clair que la présence de la cage à billes 122 n'augmente que fort peu le diamètre total du vérin. Le cylindre constituant la cage 122 se termine, du côté du piston 106 dirigé vers les pistes rectilignes, par un bord crénelé dont les deux créneaux 123 séparent deux dents 124; leur rôle sera expliqué plus loin.

De la même façon, les billes 112 des pistes rectilignes sont maintenues dans les trous disposés en lignes d'une seconde cage à billes 125, constituée comme la première (si ce n'est la disposition des trous, adaptée à la configuration des pistes). Elle est aussi pourvue, du côté tourné vers les rampes hélicoïdales, d'un bord crénelé. Les bords crénelés des deux cages s'interpénétrent. Les trous des cages sont légèrement supérieurs en dimension aux billes qu'ils maintiennent de manière à en permettre le roulement.

Le mouvement des cages est asservi au mouvement des organes mobiles pour assurer le positionnement rigoureux des billes.

La première cage 122 doit suivre un mouvement hélicoidal dont la vitesse d'avance et la vitesse de rotation sont égales à la moitié des vitesses d'avance et de rotation de l'organe mobile par rapport à l'organe fixe. A cet effet, les deux dents 124 de la cage 122 comportent deux rampes hélicoïdales 126 (réalisées sous forme de lumières) qui coopèrent avec deux ergots 127 solidaires du corps pivotant 104. L'inclinaison des rampes 126 est calculée pour que le mouvement tournant de l'ergot 127 se déplaçant dans la lumière 126 induise la vitesse d'avance requise pour la cage.

La seconde cage 125 doit se déplacer, selon une trajectoire également hélicoïdale, à vitesse d'avance moitié de la vitesse de translation du piston 106 par rapport au corps 104 mais à vitesse de rotation égale à celle du corps 104. A cette fin, les dents 128 du bord crénelé de la cage 125 comportent deux lumières hélicoïdales 129 qui coopèrent avec deux ergots 130 solidaires du corps fixe 102. L'inclinaison des lumières 129 est telle que, lorsque le corps 104 pivote et que la cage 125 est entraînée, les ergots fixes 130 poussent sur les lumières de manière à régler la cage 125 à la vitesse voulue.

Les dents 124 de la première cage 122 pénètrent dans les créneaux 131 de la seconde (et réciproquement), au niveau de la bride 121, en laissant un espacement circonférentiel suffisant entre les deux cages pour permettre une rotation relative de l'une par rapport à l'autre, ce qui est nécessaire compte tenu de la vitesse angulaire de la cage 125 qui est double de celle de la cage 122. L'espacement circonférentiel est suffisant pour permettre la réalisation du mouvement de rotation limitée du corps 104 par rapport au corps 102.

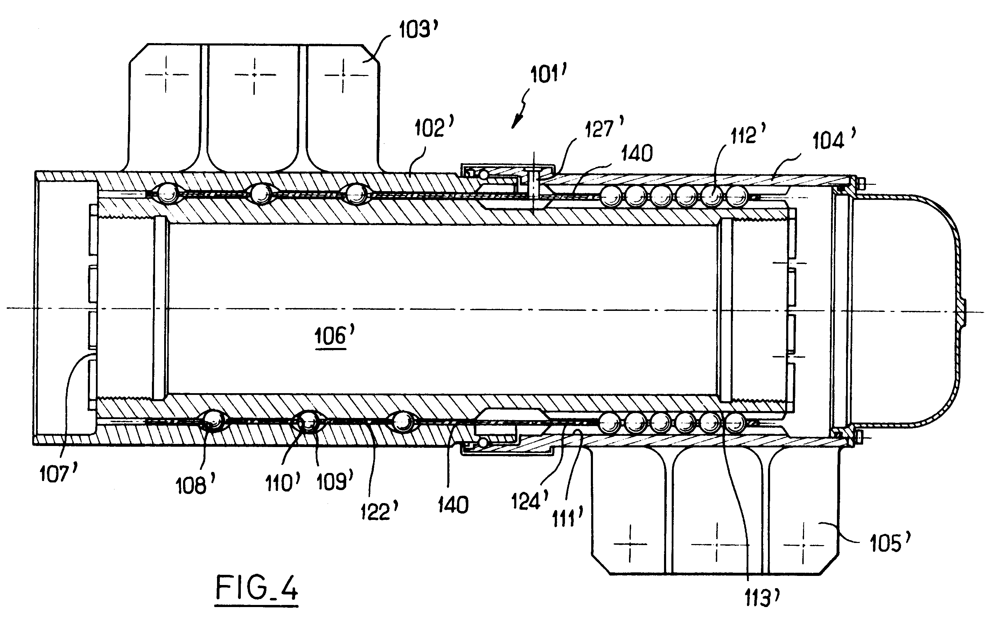

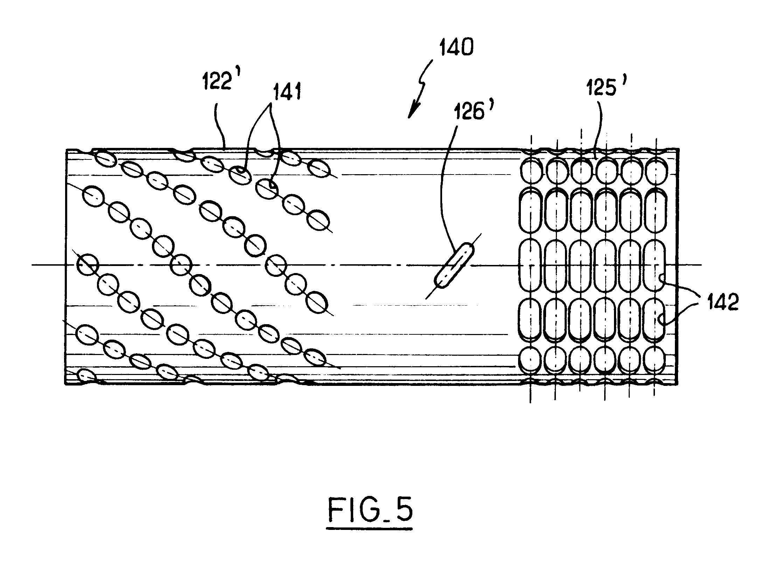

Sur les figures 4 et 5 sont représentés les éléments d'un second mode de réalisation de vérin dans lequel les deux cages sont réunies en une seule.

Cependant, pour permettre le déplacement hélicoïdal des billes des rampes longitudinales selon une vitesse angulaire double de celle des billes des rampes hélicoïdales, on a prévu des trous de réception oblongs circonférentiellement pour les billes des rampes longitudinales.

Sur ces deux figures, les éléments analogues à ceux des figures 1 et 2 portent une référence numérique similaire, affectée du signe "prime".

Selon cette réalisation, la cage cylindrique unique 140 (figure 5) regroupe deux parties 122′ et 125′ destinées à guider respectivement les billes 109′ des pistes hélicoidales 108′-110′ et les billes 112′ des pistes rectilignes 111′-113′.

Dans la partie 122′, les trous 141 de réception des billes sont sensiblement circulaires (abstraction faite de la courbure du cylindre constituant la cage) et légèrement plus grands que les billes 109′. Comme dans le premier mode de réalisation, ils sont disposés selon des hélices correspondant à la position des billes 109′ dans les rampes hélicoïdales.

En revanche, la partie 125′ comporte des trous 142 allongés dans le sens de la circonférence du cylindre, tandis que leur largeur correspond sensiblement à celle des billes 112′. Cet allongement des trous permet aux billes 112′ d'avoir lors de leur déplacement hélicoïdal une vitesse angulaire différente (double) de celle de la cage unique 140 dont la vitesse angulaire est égale à celle des billes 109′.

Le mouvement de la cage unique 140 est asservi grâce à au moins une rampe hélicoïdale 126′ réalisée sous forme de lumière, qui coopère avec au moins un ergot 127′ solidaire du corps pivotant 104′.

Cette réalisation a l'avantage par rapport à la précédente de ne pas nécessiter les découpes relativement délicates des deux cages distinctes au niveau de leur emboîtement.

## Revendications

1. Vérin rotatif à billes du type comprenant un piston (106) monté dans un corps cylindrique creux réalise en deux parties (102, 104) solidaires en translation et libres en rotation l'une par rapport à l'autre, le piston (106) comportant sur sa surface périphérique cylindrique en regard de la première partie (102) des rampes hélicoidales (110) coopérant par l'intermédiaire de premières billes (109) avec des rampes hélicoidales (108) formées à l'intérieur de ladite première partie (102), et en regard de la seconde partie (104) des rampes rectilignes (113) coopérant par l'intermédiaire de secondes billes (112) avec des rampes rectilignes (111) formées à l'intérieur de ladite seconde partie (104), moyennant quoi une poussée exercée sur le piston (106), tandis que l'une (102) desdites parties (102, 104) du corps est fixe, entraîne le pivotement de l'autre (104) desdites parties, caractérisé en ce que les premières billes (109) et secondes billes (112) sont maintenues respectivement dans des première (122) et seconde (125) cages à billes interposées entre le piston (106) et le corps (102, 104) et asservies au mouvement du piston (106), et en ce que les cages (122,125) sont distinctes et comprennent chacune un corps cylindrique crénelé dont les dents (124, 128) pénètrent dans les créneaux (131, 123) du bord crénelé de l'autre cage (122, 125), chaque dent (124, 128) comportant une lumière hélicoidale (126, 129) coopérant avec un ergot (127, 130) solidaire d'une partie (102, 104) respective du corps de vérin.

2. Vérin rotatif à billes du type comprenant un piston (106') monté dans un corps cylindrique creux réalisé en deux parties (102', 104') solidaires en translation et libres en rotation l'une par rapport à l'autre, le piston (106') comportant sur sa surface périphérique cylindrique en regard de la première partie (102') des rampes hélicoidales (110') coopérant par l'intermédiaire de premières billes (109') avec des rampes hélicoidales (108') formées à l'intérieur de ladite première partie (102'), et en regard de la seconde partie (104') des rampes rectilignes (113') coopérant par l'intermédiaire de secondes billes (112') avec des rampes rectilignes (111') formées à l'intérieur de ladite seconde partie (104'), moyennant quoi une poussée exercée sur le piston (106'), tandis que l'une (102') desdites parties (102', 104') du corps est fixe, entraîne le pivotement de l'autre (104') desdites parties, caractérisé en ce que les premières billes (109') et secondes billes (112') sont maintenues respectivement dans des première (122') et seconde (125') cages à billes interposées entre le piston (106')et le corps (102', 104')et asservies au mouvement du piston, et en ce que les première et seconde cages sont formées par les première et seconde parties (122',125') d'une cage unique (140).

3. Vérin selon la revendication 2, caractérisé en ce que la cage unique (140) comporte une enveloppe cylindrique coopérant par l'intermédiaire d'un dispositif à ergot (127') et rampe hélicoidale (126') avec une (104') des deux parties du corps.

4. Vérin selon l'une quelconque des revendications 2 ou 3, caractérisé en ce que les trous (141, 142) de réception de bille de l'une des deux parties (122', 125') de cage (140) sont allongés dans le sens circonférentiel pour permettre un déplacement angulaire différent des billes reçues dans l'une et l'autre parties.

## Claims

1. A rotary ball actuator of the type comprising a piston (106) mounted within a hollow cylindrical body constructed in two portions (102, 104) locked translationally and freely rotatable with respect to each other, the piston (106) being provided on its cylindrical peripheral surface opposite to the first portion (102) with helical ramps (110) adapted to cooperate by means of first balls (109) with helical ramps (108) formed within said first portion (102), and opposite to the second portion (104) with rectilinear ramps (113) adapted to cooperate by means of second balls (112) with rectilinear ramps (111) formed within said second portion (104), so that a thrust exerted on the piston (106) whilst one (102) of said portions (102, 104) of the body is stationary produces a pivotal displacement of the other portion (104), characterized in that the first balls (109) and second (112) balls are held respectively within first (122) and second (125) ball cages interposed between the piston (106) and the body (102, 104) which are controlled in dependence on the movement of the piston (106), and in that the ball cages (122, 125) are separate and each have a castellated body, the teeth (124, 128) of which penetrate into the recesses (131, 123) of the castellated edge of the other cage (122, 125), each tooth (124, 128) being provided with a helical slot (126, 129) in cooperating relation with a stud (127, 130) rigidly fixed to a respective portion (102, 104) of the actuator body.

2. A rotary ball actuator of the type comprising a piston (106') mounted within a hollow cylindrical body constructed in two portions (102', 104') locked translationally and freely rotatable with respect to each other, the piston (106') being provided on its cylindrical peripheral surface opposite to the first portion (102') with helical ramps (110') adapted to cooperate by means of first balls (109') with helical ramps (108') formed within said first portion (102'), and opposite to the second portion (104') with rectilinear ramps (113') adapted to cooperate by means of second balls (112') with rectilinear ramps (111') formed within said second portion (104'), so that a thrust exerted on the piston (106') whilst one (102') of said portions (102', 104') of the body is stationary produces a pivotal displacement of the other (104') portion, characterized in that the first balls (109') and second balls (112') are held respectively within first (122') and second (125') ball cages interposed between the piston (106') and the body (102', 104') which are controlled in dependence on the movement of the piston, and in that first and second ball cages are formed by the first and second portions (122', 125') of a single cage (140).

3. An actuator according to claim 2, characterized in that the single cage (140) has a cylindrical shell adapted to cooperate by means of a device comprising a stud (127') and helical ramp (126') with one (104') of the two portions of the body.

4. An actuator according to any of claims 2 or 3, characterized in that the ball-receiving holes (141, 142) of one of the two ball-cage portions (122', 125') are elongated in the circumferential direction in order to permit different angular displacement of the received balls in each portion.

## Patentansprüche

1. Kugeldrehantrieb mit einem Kolben (106), der in einem Hohlzylinderkörper untergebracht ist, der aus zwei Teilen (102,104) besteht, die zueinander translationsfest und frei drehbar sind, wobei der Kolben (106) auf seiner Umfangsfläche gegenüber dem ersten Teil (102) schraubenförmige Rampen (110) aufweist, die über erste Kugeln (109) mit schraubenförmgen Rampen (108) zusammenwirken, die auf der Innenseite des ersten Teils (102) ausgeformt sind, und gegenüber dem zweiten Teil (104) geradlinige Rampen (113) aufweist, die über zweite Kugeln (112) mit geradlinigen Rampen (111) zusammenwirken, die auf der Innenseite des zweiten Teils (104) ausgeformt sind, wodurch bewirkt wird, daß ein auf den Kolben (106) ausgeübter Schub, da einer der Teile (102,104) ortsfest ist, eine Drehung des anderen (104,102) der Teile mit sich bringt, dadurch **gekennzeichnet,** daß die ersten (109) und die zweiten (112) Kugeln jeweils in einem ersten (122) und zweiten (125) Kugelkäfig gehalten sind, die zwischen dem Kolben (106) und dem Körper (102,104) eingebracht sind und an die Drehung des Kolbens (106) gebunden sind, und daß die Käfige (122,125) unterschiedlich sind und jeder einen gezackten Zylinderkörper aufweist, dessen Zähne (124,128) jeweils in die Zinnen (131,123) des gezackten Randes des anderen Käfigs (122,125) eindringen, wobei jeder Zahn (124,128) ein schraubenförmiges Langloch (126,129) aufweist, das mit einem Vorsprung (127,130) zusammenwirkt, der mit dem entsprechenden Teil (102,104) des Antriebskörpers fest verbunden ist.

2. Kugeldrehantrieb mit einem Kolben (106'), der in einem Hohlzylinderkörper untergebracht ist, der aus zwei Teilen (102',104') besteht, die zueinander translationsfest und frei drehbar sind, wobei der Kolben (106') auf seiner Umfangsfläche gegenüber dem ersten Teil (102') schraubenförmige Rampen (110') aufweist, die über erste Kugeln (109') mit schraubenförmigen Rampen (108') zusammenwirken, die auf der Innenseite des ersten Teils (102') ausgeformt sind, und gegenüber dem zweiten Teil (104') geradlinige Rampen (113') aufweist, die über zweite Kugeln (109') mit schraubenförmigen Rampen (108') zusammenwirken, die auf der Innenseite des ersten Teils (102') ausgeformt sind, und gegenüber dem zweiten Teil (104') geradlinige Rampen (113') aufweist, die über zweite Kugeln (112') mit geradlinigen Rampen (111') zusammenwirken, die auf der Innenseite des zweiten Teils (104') ausgeformt sind, wodurch bewirkt wird, daß ein auf den Kolben (106') ausgeübter Schub, da einer der Teile (102',104') ortsfest ist, eine Drehung des anderen (104', 102') der Teile mit sich bringt, dadurch **gekennzeichnet,** daß die ersten Kugeln (109') und zweiten Kugeln (112') in einem ersten (122') und zweiten (125') Kugelkäfig gehalten sind, die zwischen dem Kolben (106') und dem Körper (102',104') angebracht sind und an die Drehung des Kolbens gebunden sind, und daß der erste und zweite Käfig gebildet ist durch einen ersten und zweiten Teil (122', 125') eines einteiligen Käfigs (140).

3. Kugeldrehantrieb nach Anspruch 2, dadurch **gekennzeichnet,** daß der einteilige Käfig (140) ein zylindrisches Gehäuse aufweist, welches über eine Nockenvorrichtung (127') und die schraubenförmige Rampe (126') mit einem (104') der beiden Teile des Körpers zusammenwirkt.

4. Kugeldrehantrieb nach Anspruch 2 oder 3, dadurch **gekennzeichnet,** daß die Kugelaufnahmelöcher (141, 142) des einen der beiden Teile (122',125') des Käfigs (140) in Umfangsrichtung verlängert sind, um eine unterschiedliche Winkelversetzung der in dem einen und anderen Teil aufgenommenen Kugeln zu ermöglichen.
